(19) Europäisches Patentamt
European Patent Office
Office européen des brevets

(11) **EP 1 975 924 A1**

(12) **EUROPEAN PATENT APPLICATION**

(43) Date of publication:
**01.10.2008 Bulletin 2008/40**

(51) Int Cl.:
*G10L 19/00* (2006.01)  *H04M 3/22* (2006.01)

(21) Application number: **07006550.3**

(22) Date of filing: **29.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
- **Koninklijke KPN N.V.**
  **2516 CK The Hague (NL)**
- **Nederlandse Organisatie voor Toegepast-Natuurwetenschappelijk Onderzoek TNO**
  **2628 VK  Delft (NL)**

(72) Inventors:
- **Beerends, John Gerard**
  **4585 PG Hengstdijk (NL)**

- **Busz, Bartosz**
  **51-691 Wroclaw (PL)**
- **Bangma, Monno**
  **2632 DG Nootdorp (NL)**
- **Van Vugt, Jeroen Martijn**
  **2518 VD The Hague (NL)**
- **Niamut, Omar A.**
  **3131 HV Vlaardingen (NL)**

(74) Representative: **Wuyts, Koenraad Maria**
  **Koninklijke KPN N.V.,**
  **Intellectual Property Group,**
  **P.O. Box 95321**
  **2509 CH  Den Haag (NL)**

(54) **Method and system for speech quality prediction of the impact of time localized distortions of an audio transmission system**

(57)    Method and processing system for establishing the impact of time response distortion of an input signal which is applied to an audio transmission system (10) having an input and an output. A processor (11) is connected to the audio transmission system (10) for receiving the input signal (X(t)) and the output signal (Y(t)), and the processor (11) is arranged for outputting a time response degradation impact quality score. The processor (11) executes preprocessing of the input signal (X(t)) and output signal (Y(t)) to obtain pitch power densities (PPX $(f)_n$, PPY$(f)_n$) comprising pitch power density values for cells in the frequency (f) and time (n) domain, calculating a pitch power ratio function (PPR$(f)_n$) of the pitch power densities for each cell, and determining a time response distortion quality score (MOSTD) indicative of the transmission quality of the system (10) from the pitch power ratio function (PPR$(f)_n$).

## Fig 1

**Description**

**Field of the invention**

The present invention relates to a method and a system for measuring the transmission quality of a system under test, an input signal entered into the system under test and an output signal resulting from the system under test being processed and mutually compared. More particularly, the present method relates to a method for measuring the transmission quality of an audio transmission system, an input signal being entered into the system, resulting in an output signal, in which both the input signal and the output signal are processed, comprising preprocessing of the input signal and output signal to obtain pitch power densities for the respective signals, comprising pitch power density values for time-frequency cells in the time frequency domain (f, n).

**Prior art**

Such a method and system are known from ITU-T recommendation P.862, "Perceptual evaluation of speech quality (PESQ), an objective method for end-to-end speech quality assessment of narrow-band telephone networks and speech codecs", ITU-T 02.2001 [3].
Also, the article by J. Beerends et al. "PESQ, the new ITU standard for objective measurement of perceived speech quality, Part II - Perceptual model," J. Audio Eng. Soc., vol. 50, pp. 765-778 (2002 Oct.), describes such a method and system [2].
The invention is a further development of the idea that speech and audio quality measurement should be carried out in the perceptual domain. In general this idea results in a system that compares a reference speech signal with a distorted signal that has passed through the system under test. By comparing the internal perceptual representations of these signals, estimation can be made about the perceived quality. All currently available systems suffer from the fact that a single number is outputted that represents the overall quality. This makes it impossible to find underlying causes for the perceived degradations. Classical measurements like signal to noise ratio, frequency response distortion, total harmonic distortion, etc. pre-suppose a certain type of degradation and then quantify this by performing a certain type of quality measurement. This classical approach finds underlying causes for bad performance of the system under test but is not able to quantify the impact of the different types of distortions. The impact of linear frequency response distortions is described in a perceptual relevant manner in international patent application publication WO2006/033570. For the impact of time response distortions no solution is available yet.

**Summary of the invention**

The present invention seeks to provide an improvement of the correlation between the perceived quality of speech as measured by the P.862 method and system and the actual quality of speech as perceived by test persons, specifically directed at time response distortions.
According to the present invention, a method according to the preamble defined above is provided, in which the method further comprises calculating a pitch power ratio function of the pitch power densities of the output signal and input signal, respectively, for each cell, and determining a time response distortion quality score indicative of the transmission quality of the system from the pitch power ratio function. Using this method, it is possible to quantify the relative impact of time response distortions, i.e. distortions for which subjects perceive a strong time localized distortion.
In a further embodiment, determining the time response distortion quality score comprises subjecting the pitch power ratio function $(PPR(f)_n)$ to a global pitch power ratio normalization to obtain a normalized pitch power ratio function $(PPR'(f)_n)$. This global normalization allows to detect both distortion due to an increase in power level (time pulse) and distortion due to a decrease in power level (time clip).
Determining the time response distortion quality score may in a further embodiment comprise logarithmically summing the normalized pitch power ratio function $(PPR'(f)_n)$ per frame over all frequencies to obtain a framed pitch power ratio function $(PPR_n)$. In this step, the summation over the frequency domain (pitch) provides the time localized information in the time domain needed to detect time clip/time pulse type distortions.
In a further embodiment, the method further comprises determining a set of discrimination parameters, and marking a frame as time distorted (i.e. time clip or time pulse) using the set of discrimination parameters and the framed pitch power ratio function $(PPR_n)$. The set of discrimination parameters ensures a proper marking of frames in accordance with the type of time distortion, and allows to properly discern these type of distortions from other types of distortions, such as noise and frequency distortion.
The final quality score may be calculated according to an even further embodiment, in which the method further comprises determining the time response distortion quality score (MOSTD) by logarithmic summation of the framed pitch power ratio function $(PPR_n)$ over frames marked as time distorted. Furthermore, the score may be limited (e.g. to a maximum value of 1.2) and mapped to a Mean Opinion Score. This allows to provide an objective value which is suitable for comparison with subjective testing.

For the time clip embodiments, the method further comprises executing a discrimination procedure for marking a frame as time clip distorted using a global loudness parameter (LDiffAvg), a set of global power parameters (PPRDiscr$_a$, PPRDiscr$_p$, PPRDiscr$_{all}$), and the pitch power ratio function in the time domain (PPR$_n$). These parameters allow to properly mark a frame as time clip distorted. Calculating the global loudness parameter comprises determining an arithmetic average of loudness differences (LDiffAvg) between loudness transformations (LX(f)$_n$, LY(f)$_n$) of the pitch power densities (PPX(f)$_n$, PPY(f)$_n$) over all frames in the time frequency domain for pitch frame cells in which the input signal loudness (LX(f)$_n$) is greater than the output signal loudness (LY(f)$_n$). The set of power parameters comprises a discrimination parameter for (speech) active frames (PPRDiscr$_a$), a discrimination parameter for passive frames (PPRDiscr$_p$) and a discrimination parameter for all frames (PPRDiscr$_{all}$). By properly defining the parameters concerned, it is ensured that only distortions due to time clip distortions are actually accounted for, i.e. that the discrimination process is orthogonal to other types of distortions.

In a specific embodiment, a frame is marked as time clip distorted if the following conditions apply: (LDiffAvg < first threshold value (e.g. 2.5) or PPRDiscr$_{all}$ < second threshold value (e.g. -4.0)) AND ((PPRDiscr$_{all}$ < third threshold value (e.g. 0.2) AND PPRDiscr$_p$ < fourth threshold value (e.g. -0.3)) or (PPRDiscr$_{all}$ < fifth threshold value (e.g. 0))). The values indicated provide a good result when applying similar steps as in the PESQ method (see e.g. ref. [1-3]).

For the time pulse embodiments, the method further comprises executing a discrimination procedure for marking a frame as time pulse distorted using a set of global power parameters (PPRDiscr$_a$, PPRDiscr$_p$, PPRDiscr$_{all}$), and the pitch power ratio function in the time domain (PPR$_n$). These parameters allow to properly mark a frame as time pulse distorted. The set of power parameters in these embodiments comprises a discrimination parameter for (speech) active frames (PPRDiscr$_a$), a discrimination parameter for passive frames (PPRDiscr$_p$) and a discrimination parameter for all frames (PPRDiscr$_{all}$). By properly defining the parameters concerned, it is ensured that only distortions due to time pulse distortions are actually accounted for, i.e. that the discrimination process is orthogonal to other types of distortions. In a specific embodiment, a frame is marked as time pulse distorted if: ((PPRDiscr$_{all}$ >= sixth threshold value (e.g. 1.0) and PPRDiscr$_a$ > seventh threshold value (e.g. -1.75)) or (PPRDiscr$_a$> eighth threshold value (e.g. 1.0)) or (PPRDiscrp> ninth threshold value (e.g. 10.5)) or (maxFramePulseValue > tenth threshold value (e.g. 10))), in which maxFramePulseValue is a maximum value of the pitch power ratio PPR$_n$ over all active frames. The specific values indicated provide a good result when applying similar steps as in the PESQ method (see e.g. ref. [1-3]).

In a further embodiment, the method further comprises a compensation of the pitch power density functions of the input signal (PPX(f)$_n$) to compensate for frequency response distortions. By first compensating for frequency response distortions, a better result is obtained for determining the time clip or time pulse distortion contributions to the speech quality perception. Similarly, in a further embodiment, the method further comprises a compensation of the pitch power density functions of the input signal (PPX(f)$_n$) and output signal (PPY(f)$_n$) to compensate for noise response distortions, allowing to minimize possible errors due to noise. Also, it is possible to add a further step in an even further embodiment, in which the method comprises a compensation of the pitch power density functions of the output signal (PPY(f)$_n$) to compensate for a global power level normalization.

In a further aspect, the present invention relates to a processing system for establishing the impact of time response distortion of an input signal which is applied to an audio transmission system having an input and an output, the output of the audio transmission system providing an output signal, comprising a processor connected to the audio transmission system for receiving the input signal and the output signal, in which the processor is arranged for outputting a time response degradation impact quality score, and for executing the steps of the present method embodiments.

In an even further aspect, the present invention relates to a computer program product comprising computer executable software code, which when loaded on a processing system, allows the processing system to execute the method according to any one of the present method embodiments.

**Short description of drawings**

The present invention will be discussed in more detail below, using a number of exemplary embodiments, with reference to the attached drawings, in which

    Fig. 1 shows a block diagram of an application of the present invention; and
    Fig. 2 shows a flow diagram of an embodiment according to the present invention.

**Detailed description of exemplary embodiments**

During the past decades a number of measurement techniques have been developed that allow to quantify the quality of audio devices in a way that closely copies human perception. The advantage of these methods over classical methods that quantify the quality in terms of system parameters like frequency response, noise, distortion, etc is the high correlation between subjective measurements and objective measurements. With this perceptual approach a series of audio signals is inputted into the system under test and the degraded output signal is compared with the original input to the system on the basis of a model of human perception. On the basis of a set of comparisons the quality of the system under test can be quantified.

The perceptual model uses the basic features of the human auditory system to map both the original input and the degraded output onto an internal representation. If the difference in this internal representation is zero the system under test is transparent for the human observer representing a perfect system under test (from the perspective of perceived audio quality). If the difference is larger then zero it is mapped to a quality number using a cognitive model, allowing quantifying the perceived degradation in the degraded output signal.

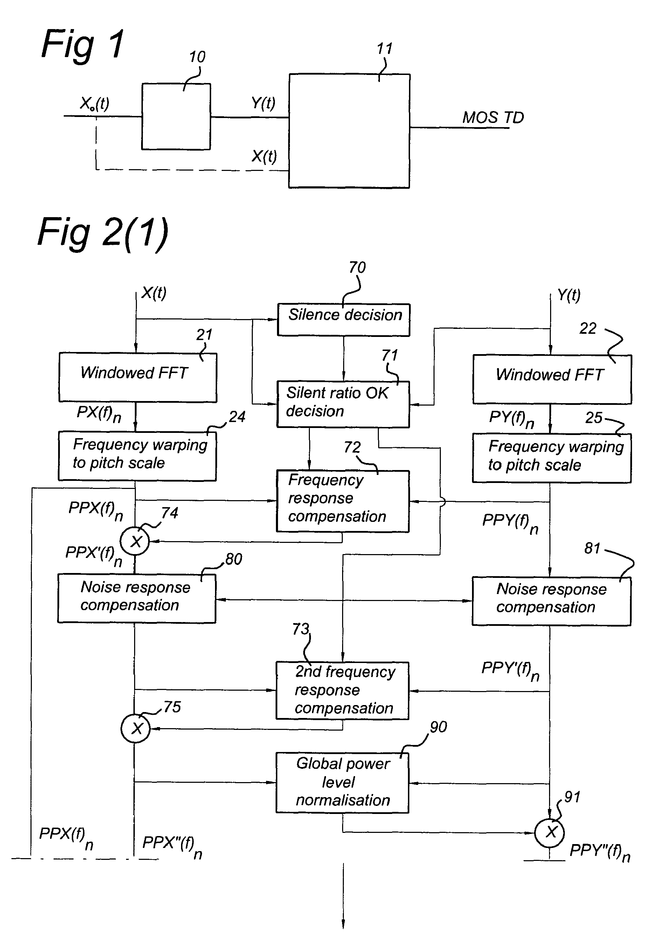

Fig. 1 shows schematically a known set-up of an application of an objective measurement technique which is based on a model of human auditory perception and cognition, and which follows the ITU-T Recommendation P.862 [3], for estimating the perceptual quality of speech links or codecs. The acronym used for this technique or device is PESQ (Perceptual Evaluation of Speech Quality). It comprises a system or telecommunications network under test 10, hereinafter referred to as system 10, and a quality measurement device 11 for the perceptual analysis of speech signals offered. A speech signal $X_0(t)$ is used, on the one hand, as an input signal of the system 10 and, on the other hand, as a first input signal $X(t)$ of the device 11. An output signal $Y(t)$ of the system 10, which in fact is the speech signal $X_0(t)$ affected by the system 10, is used as a second input signal of the device 11. An output signal $Q$ of the device 11 represents an estimate of the perceptual quality of the speech link through the system 10.

The device 11 may comprise a dedicated signal processing unit, e.g. comprising one or more (digital) signal processors, or a general purpose processing system having one or more processors under the control of a software program comprising computer executable code. The device 11 is provided with suitable input and output modules and further supporting elements for the processors, such as memory, as will be clear to the skilled person.

Since the input end and the output end of a speech link (shown as the system 10 in Fig. 1), particularly in the event it runs through a telecommunications network, are remote, use is made in most cases of speech signals $X(t)$ stored on data bases for the input signals of the quality measurement device 11. Here, as is customary, speech signal is understood to mean each sound basically perceptible to the human hearing, such as speech and tones. The system under test 10 may of course also be a simulation system, which e.g. simulates a telecommunications network.

A disadvantage of the perceptual approach is that is gives no insight into the underlying causes for the perceived audio quality degradation. Only a single number is output that has a high correlation with the subjectively perceived audio quality. According to the present invention it is possible to predict the quality of speech signals using ITU-T recommendation P.862 PESQ as the core algorithm [1], [2], [3] and at the same time to determine the degree in which a speech signal is affected by time distortion. Other types of underlying causes for perceived degradation of a speech signal are e.g. noise and linear frequency response distortion.

Some systems behave time variant and may introduce strong time localized errors. Examples are clicks, as found with old records, mutes, as found in packet (Voice over IP) systems, and adaptive gain control distortions. In general, these distortions have only little impact on the global frequency domain representation of the signal and cannot be interpreted as being the result of a linear time invariant system. Another view on the difference between time response and frequency response distortions is that frequency response distortions can be observed on all time limited (windowed) signal parts while time response distortions can be observed on all frequency limited signal parts. Time response distortions are becoming increasingly important in the telecommunication due to the use of packetized transport, where sometimes packets are lost (Voice over mobile, Voice over IP), and the use of automatic gain control, to compensate the large level variations as found in mobile networks.

The basic idea in the development of the time response distortion Mean Opinion Score (MOSTD) is to quantify the perceptual difference between the reference input signal and degraded output signal, only taking into account the differences based on time localized distortions. Generally, the same internal representation calculations are made as used in PESQ, i.e. time, pitch and loudness representations are used in the MOSTD score. Instead of calculating a difference function in the time, pitch domain, as used in PSQM and PESQ, a pitch power ratio function of the degraded output signal to original input signal is calculated which is used to determine the impact of time localized distortions.

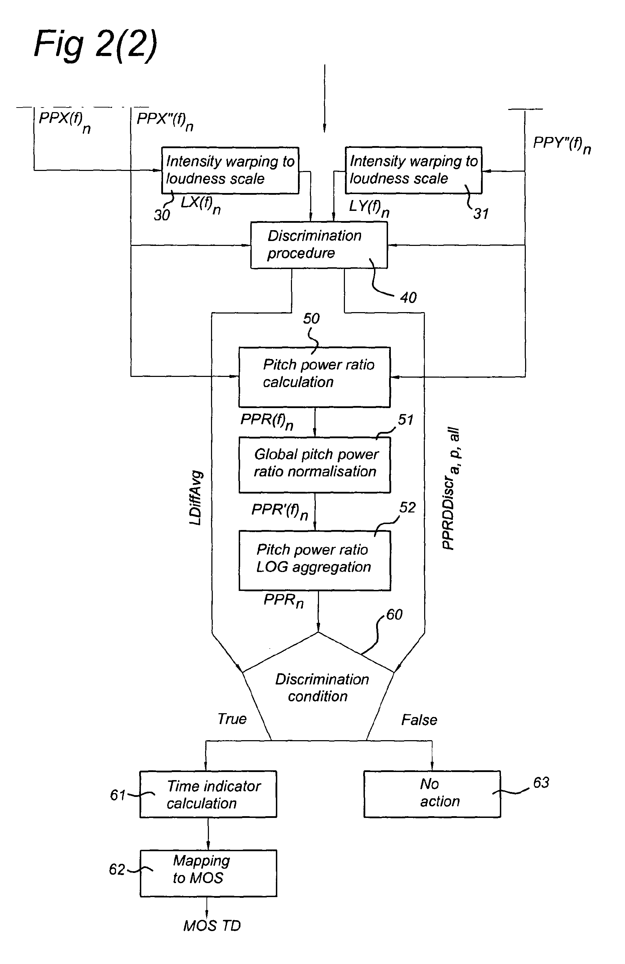

In an MOSTD scoring algorithm according to an embodiment of the present invention, as shown in the flow chart diagram of Fig. 2, the time signals $X(t)$ and $Y(t)$ (original and degraded signal) are transformed to time, frequency, power density functions $PX(f)_n$ and $PY(f)_n$ with $f$ the frequency bin number and $n$ the frame index (see blocks 20-22 in Fig. 2). The frequency axes are then warped in order to get the pitch power density functions $PPX(f)_n$ and $PPY(f)_n$ per pitch and frame cell (see blocks 23-25 in Fig. 2).

These two signals are used in the time response distortion measurement process, which is carried out in two or three steps. As a first optional step a general normalization for compensating frequency and noise response distortions and power level differences between input and output signals is executed. This optional first step will be discussed in more detail below, with reference to the blocks 70-75, 80 and 90 in Fig. 2.

In a next step, a discrimination process takes place, in which a set of discrimination parameters, different for time clip and time pulse indicator, are calculated. These discrimination parameters enable to ensure the orthogonality of the time response indicators with different types of distortion (linear frequency response and noise distortions). The set of discrimination parameters may comprise a loudness parameter and/or a plurality of power parameters.

The loudness parameter (indicated by LDiffAvg) is an arithmetic average of differences between output and input loudness over all frames in the pitch domain for cells in which the input signal loudness is greater than the output signal loudness. The set of power parameters (indicated by $PPRDiscr_{a,p,all}$) comes in three different flavours, one for speech active frames, one for speech passive frames and one for all (speech active and passive) frames. All three flavours are average products of the logarithmic of the pulse power ratios ($PPR(f)_n$) over respective frames (active, passive or all).

An active frame is a frame n for which the input reference signal level is above a lower power limit, and a passive frame is a frame n for which the signal level is below the lower power limit.

The key performance indicator function in embodiments of the present invention is a pitch power ratio function per pitch frame cell $PPR(f)_n$. This pitch power ratio function $PPR(f)_n$ is calculated as the ratio of the output pitch power density function and input pitch power density function for each pitch frame cell (see block 50 in Fig. 2). The ratio behaviour for small values is smoothed by adding a small constant value (delta), i.e. the ratio is defined by (($PPY(f)_n$+delta)/($PPX(f)_n$+delta)). This pitch power ratio function $PPR(f)_n$ may be normalized in a global sense, resulting in a normalized pitch power ration function ($PPR'(f)_n$, see block 51 in Fig. 2). The present invention is based on the insight that the perceptual impact of strong variations along the time axis can now be quantified by calculating a product of all ratio's in the same time frame cell (index n) over all frequency bands f (i.e. the framed pitch power ratio function $PPR_n$, see block 52 in Fig. 2).

In an embodiment of the present invention, the set of discrimination parameters and the framed pitch power ratio function $PPR_n$ are used to determine whether or not a frame cell in the time domain is either distorted by a time clipping or a time pulsing event, and the respective frame is marked as time clipped or time pulsed.

As a final major step, two time indicators (clip and pulse) are determined (see block 61 in Fig. 2) from the framed pitch power ratio values $PPR_n$ for the time clipped and/or time pulsed frames, which can then be mapped to the Mean Opinion Score for time response distortion (MOSTD, see block 62 in Fig. 2). In one embodiment, the indicator for time clipped/pulsed frames is determined as the logarithmic summation of the framed pitch power ratios of the time clipped/pulsed frames only. This indicator may then be limited to a maximum value and mapped onto a Mean Opinion Score, similar to the known PESQ methods.

In order to get a correct quantification of the impact of both time pulsing and time clipping events, a global pitch power ratio normalization (block 51 in Fig. 2) is carried out before calculating the final framed pitch power ratios (block 52 in Fig. 2). This ratio compensation is constructed separately for calculating the impact of pulse and clip type of time response distortions. Furthermore, the calculation of the set of power parameters ($PPRDiscr_{a,p,all}$) is different for the determination of the impact of pulse and clip type of time response distortions. This is elucidated in the following, more detailed description of embodiments of the present invention.

In the time clip indicator algorithm according to an embodiment of the present invention, two discrimination parameters are used: the loudness parameter LDiffAvg is the global loudness difference between input ($LX(f)_n$) and output ($LY(f)_n$) signals (over all time-pitch loudness density cells), and the set of power parameters $PPRDiscr_{a,p,all}$ comprising a global log (ratio) of output ($PPY''(f)_n$) and input ($PPX''(f)_n$) pitch power densities, for the active, passive and all frames, respectively. Before calculating the first parameter, the power axes of both input (without compensation, i.e. $PPX(f)_n$) and output (with compensation, i.e $PPY''(f)_n$) signals are warped in order to get a pitch loudness density functions $LX(f)_n$ and $LY(f)_n$ using the same Zwicker's transformation as the one used in ITU P.862 (see blocks 30, 31 in Fig. 2):

$$LX(f)_n = S_l \cdot \left(\frac{P_0(f)}{0.5}\right)^{0.23} \cdot \left[\left(0.5 + 0.5 \cdot \frac{PPX(f)_n}{P_0(f)}\right)^{0.23} - 1\right]$$

where $S_l$ is a scaling factor as defined in P.862 and $P_0(f)$ represents the absolute hearing threshold.

After that, a global loudness compensation factor is calculated, that compensates for the overall perceived loudness difference between input and output. Next the global loudness difference is determined (block 40 in Fig. 2) as an arithmetic average of differences between output and input loudness over all frames in pitch domain LDiff(f) for pitch frame cells in which input signal loudness is greater than the output signal loudness:

$$LDiffAvg = \sum_{f=0}^{Nsubset} \frac{LDiff(f)}{N_{subset}}$$

where $N_{subset}$ is a subset of all pitch bands, the set for which the input signal loudness is greater than the output signal loudness.

The second discrimination parameter comes in three different flavours, one for speech active frames (PPRDiscr$_a$), one for speech passive frames (PPRDiscr$_p$) and one for all, speech active and passive frames (PPRDiscr$_{all}$). All three flavours are an average products of log (power density ratios PPR(f)$_n$) over respective frames (active, passive or all):

$$PPRDiscr_{a,p,all} = \frac{\sum_{n=a,p,all} \sum_{f} \log_{10}\left(PPR(f)_n\right)}{a, p, all}$$

where *a, p, all* are the numbers of active, passive, all frames respectively

The global pitch power ratio normalization for the time clip indicator is calculated from the ratio PPR(f)$_n$ (calculated in block 50 in Fig. 2) differently in active and passive frames. For active frames, it is calculated over frames (time-cell) for which power ratio is between 0.2 and 5 and for which the pitch power ratio in the underlying time-frequency cells (PPY'(f)$_n$ + delta / PPX"(f)$_n$ + delta) is between 0.05 and 20. In passive frames the global normalizing ratio is determined only for cells for which power ratio (PPY'(f)$_n$ + delta / PPX"(f)$_n$ + delta) is between 0.2 and 5 (block 51 in Fig, 2). Next the ratio's are multiplied for each frame over all frequency bands (block 52 in Fig. 2) using only active time frequency cells for which the ratio is less than 1.0 (decrease in power). When the ratio PPR$_n$ in a frame is less than -0.2 and if discrimination condition is fulfilled, this frame is marked as a time clipped frame (in the discrimination condition block 60 in Fig. 2). The discrimination condition is constructed in a way ensuring orthogonality of the clip indicator with other distortion indicators. Two main conditions must be true to mark a frame as time clipped:

1. Global loudness difference between input and output (calculated as an average over all time-pitch loudness density cells for which the output is bigger than the input) LDiffAvg is less than a first threshold value (e.g. 2.5) or the global log(ratio) of output and input power densities over all frames (active and passive) PPRDiscr$_{all}$ is less than a second threshold value (e.g. -4.0) and,

2. Global ratio of output and input power densities over all frames PPRDiscr$_{all}$ is less than a third threshold value (e.g. 0.2) and global ratio of output and input power densities over passive frames PPRDiscr$_p$ is less than a fourth threshold value (e.g. -0.3) or global ratio of output and input power densities over all frames PPRDiscr$_{all}$ is less than a fifth threshold value (e.g. 0).

The first condition prevents pure linear frequency distortions (for which a global loudness difference between the input and output signals LDiffAvg is bigger than 2.5) to be considered as a clip and finds severe clip distorted signals. The second condition ensures no noise distorted signals (for which global ratio of output and input power densities over passive frames PPRDiscr$_{all}$ is greater than -0.3) to be considered as a clip.

The sum over the log (ratio's) PPR$_n$ in the time clipped frames (as calculated in block 61 in Fig. 2) is the indicator that correlates with the subjectively perceived impact of time response distortions for which the local loud errors are caused by a local loss of power. Next the time clip indicator value is limited to 1.2 and a 3$^{rd}$ order mapping into a MOS scale (Mean Opinion Score five grade scale) is done (in block 62 in Fig. 2).

The key performance indicator function, the pitch power ratio PPR(f)$_n$ per time pitch cell, is also used in the calculation of the time pulse indicator but using a different global pitch power ratio normalization and a different set of discrimination parameters.

In the time pulse indicator algorithm according to an embodiment of the present invention, two average normalization ratios are calculated, one over a subset of the passive frames and one over a subset of the active frames.

The passive subset consists of frames for which the input signal power is below a certain threshold, e.g. for which the frame power ratio ((output+delta) / (input+delta)) is less than 5000 (thus compensating additive noise up to a maximum level that is 5000 times a high as the input noise level) and for which the pitch power ratio in the underlying time-frequency cells, (PPY'(f)$_n$ + delta / PPX"(f)$_n$ + delta), is between 0.5 and 2.

The active subset consists of frames for which the input signal power is above the same criterion, for which the frame power ratio ((output+delta)/(input+delta)) is between 0.2 and 5.0 and for which the power ratio in the underlying time-frequency cells, (PPY'(f)$_n$ + delta / PPX"(f)$_n$ + delta), is between 0.667 and 1.5.

Discrimination parameters used in time pulse indicator calculation are only global log(ratios) of output and input power densities over active, passive and active and passive frames (PPRDiscr$_{a,p,all}$), as calculated in block 40 of Fig. 2. Similarly to time clip indicator, all three flavours are a products of pitch power density ratio's for which the ratio behaviour for small values is smoothed by adding a small constant, i.e. the ratio PPR(f)$_n$ is defined by (output+delta) / (input+delta) over respective frames. This time, all parameters are L$_p$ weighted using p=2.0, which emphasizes impact of loud pulses for each parameter:

$$PPRDiscr_{a,p,all} = \frac{\left( \sum_{n=a,p,all} \left( \sum_{f} \log_{10}\left(PPR(f)_n\right) \right)^p \right)^{\frac{1}{p}}}{a,p,all}$$

with n = total number of respective frames and p=2.0.

After global pitch power ratio normalization (block 51 in Fig. 2) and discrimination process calculation (block 40 in Fig. 2), the ratios are multiplied for each frame over all frequency cells (i.e. the log aggregation of block 52 in Fig. 2). Furthermore, in this embodiment the framed pitch power ratio PPR$_n$ is compressed with power $p$ = 0.675, which increase the correlation of time pulse indicator with perceived speech quality:

$$PPR_N = \left(PPR_n\right)^p$$

When the PPR$_N$ after compression is bigger than 2.0 and the time pulse discrimination condition is fulfilled, the frame is marked as a time pulsed frame (see block 60 in Fig. 2). For pulse tagging, the discrimination condition has a structure as follows:

((PPRDiscr$_{all}$>= sixth threshold value (e.g. 1.0)) and (PPRDiscr$_a$> seventh threshold value (e.g. -1.75))) or
(PPRDiscr$_a$>eighth threshold value (e.g. 1.0)) or
(PPRDiscr$_p$>ninth threshold value (e.g. 10.5)) or
(maxFramePulseValue>tenth threshold value (e.g. 10)),
where MaxFramePulseValue parameter is a maximum value of PPR$_N$ over all speech active frames before compression.

All conditions above again ensure both orthogonality of pulse indicator with other distortion indicators and high correlation with subjective perception of pulse-like distortions.

The sum over the log(ratio's) in the time pulsed frames (as calculated in block 61 in Fig. 2) is the indicator that correlates with the subjectively perceived impact of time response distortions for which the local loud errors are caused by the local introduction of power. After the time pulse indicator is calculated, its value is limited to level of 1.0 and 3$^{rd}$ order mapping into a MOS scale is performed (see block 62 in Fig. 2).

As discussed above, the time response distortion measurement process may comprise a first step, comprising a number of compensation steps (frequency response compensation, noise response compensation and global power level normalization).

Frequency response distortions are compensated in two stages, indicated by blocks 72 and 73 in Fig. 2. The first one (block 72) takes place before noise response compensation and the second one (block 73), after it. Both stages modify only the input reference spectrum PPX(f)$_n$ by multiplying (using multiplier 74, and 75, respectively) each frame of this signal PPX(f)$_n$ by the ratio of output/input that is calculated as an average power of the output signal divided by an average power of the input signal. In this calculation only frames are used for which speech activity occurs (i.e. the input signal level is above a lower power limit per frame, as e.g. determined using block 70) and for which the ratio between output and input frame power (as e.g. determined in block 71) is between 1/5 and 5. This last limitation prevents compensating for time response distortions in the output signal.

Noise response distortions are compensated in both input reference PPX'(f)$_n$ and output distorted PPY(f)$_n$ signals (block 80 and 81, respectively) using a silent frame criterion (originating from block 71 in Fig. 2) based on the input signal power only.

First, separately for input and output signals, average power densities over passive frames (frames for which the input signal level is below a certain threshold) are calculated using an *Lp* weighting with p = 10, only using frames for which the input to output ratio is less than 5000 (to restrict the compensation to noise only):

$$L_p(f) = \left( \frac{1}{N} \sum_{n=1}^{N} PPX(f)_n{}^p \right)^{1/p}$$

with N = total number of passive frames and p=10.

Then, for each frequency-time cell, the average power density is subtracted from actual power density to compensate for noise response distortions (blocks 80, 81). If the resulting value is smaller than 0, the power density is set to 0 and the cell represents a silence.

A global power level normalization is made only for the output signal PPY'(f)$_n$ in block 90 as depicted in Fig. 2. For each speech active time frame, the output power is multiplied by a normalization factor. This normalization factor is a ratio of average input signal power to output signal power calculated over frames without time distortions, i.e. for which output signal power to input signal power ratio is greater than 0.67 and smaller than 1.5. The resulting normalization factor is bigger than 1.0 if the power level of the output signal is smaller than the power level of the input signal and smaller than 1.0 if the output signal power is bigger.

References incorporated herein by reference

[1] A. W. Rix, M. P. Hollier, A. P. Hekstra and J. G. Beerends, "PESQ, the new ITU standard for objective measurement of perceived speech quality, Part 1 - Time alignment," J. Audio Eng. Soc., vol. 50, pp. 755-764 (2002 Oct.).
[2] J. G. Beerends, A. P. Hekstra, A. W. Rix and M. P. Hollier, "PESQ, the new ITU standard for objective measurement of perceived speech quality, Part II - Perceptual model," J. Audio Eng. Soc., vol. 50, pp. 765-778 (2002 Oct.).
[3] ITU-T Rec. P.862, *"Perceptual Evaluation Of Speech Quality (PESQ), An Objective Method for End-to-end Speech Quality Assessment of Narrowband Telephone Networks and Speech Codecs,"* International Telecommunication Union, Geneva, Switzerland (2001 Feb.).

**Claims**

1. Method for measuring the transmission quality of an audio transmission system (10), an input signal (X(t)) being entered into the system (10), resulting in an output signal (Y(t)), in which both the input signal (X(t)) and the output signal (Y(t)) are processed, comprising:

   - preprocessing of the input signal (X(t)) and output signal (Y(t)) to obtain pitch power densities (PPX(f)$_n$, PPY(f)$_n$) for the respective signals, comprising pitch power density values for cells in the frequency (f) and time (n) domain;
   - calculating a pitch power ratio function (PPR(f)$_n$) of the pitch power densities of the output signal and input signal, respectively, for each cell;
   - determining a time response distortion quality score (MOSTD) indicative of the transmission quality of the system (10) from the pitch power ratio function (PPR(f)$_n$).

2. Method according to claim 1, in which determining the time response distortion quality score comprises subjecting the pitch power ratio function (PPR(f)$_n$) to a global pitch power ratio normalization to obtain a normalized pitch power ratio function (PPR'(f)$_n$).

3. Method according to claim 2, in which determining the time response distortion quality score further comprises:

   logarithmically summing the normalized pitch power ratio function (PPR'(f)$_n$) per frame over all frequencies to obtain a framed pitch power ratio function (PPR$_n$).

4. Method according to claim 3, the method further comprising
   determining a set of discrimination parameters,
   and marking a frame as time distorted using the set of discrimination parameters and the framed pitch power ratio function (PPR$_n$).

5. Method according to claim 4, further comprising determining the time response distortion quality score (MOSTD) by logarithmic summation of the framed pitch power ratio function ($PPR_n$) over frames marked as time distorted.

6. Method according to claim 4 or 5, the method further comprising:

   executing a discrimination procedure for marking a frame as time clip distorted using a global loudness parameter (LDiffAvg), a set of global power parameters ($PPRDiscr_a$, $PPRDiscr_p$, $PPRDiscr_{all}$), and the pitch power ratio function in the time domain ($PPR_n$).

7. Method according to claim 6, in which calculating the global loudness parameter comprises determining an arithmic average of loudness differences (LDiffAvg) between loudness transformations ($LX(f)_n$, $LY(f)_n$) of the pitch power densities ($PPX(f)_n$, $PPY(f)_n$) over all frames in the time frequency domain for pitch frame cells in which the input signal loudness ($LX(f)_n$) is greater than the output signal loudness ($LY(f)_n$).

8. Method according to claim 6 or 7, in which the set of power parameters comprises a discrimination parameter for active frames ($PPRDiscr_a$), a discrimination parameter for passive frames ($PPRDiscr_p$) and a discrimination parameter for all frames ($PPRDiscr_{all}$).

9. Method according to any one of claims 6-8, in which a frame is marked as time clip distorted if ($LDiffAvg$ < first threshold value or $PPRDiscr_{all}$ < second threshold value) AND (($PPRDiscr_{all}$ < third threshold value AND $PPRDiscr_p$ < fourth threshold value) or ($PPRDiscr_{all}$ < fifth threshold value)).

10. Method according to claim 4 or 5, the method further comprising:

    executing a discrimination procedure for marking a frame as time pulse distorted using a set of global power parameters ($PPRDiscr_a$, $PPRDiscr_p$, $PPRDiscr_{all}$), and the pitch power ratio function in the time domain ($PPR_n$).

11. Method according to claim 10, in which the set of power parameters comprises a discrimination parameter for active frames ($PPRDiscr_a$), a discrimination parameter for passive frames ($PPRDiscr_p$) and a discrimination parameter for all frames ($PPRDiscr_{all}$).

12. Method according to claim 10 or 11, in which a frame is marked as time pulse distorted if (($PPRDiscr_{all}$ >= sixth threshold value and $PPRDiscr_a$ > seventh threshold value) or ($PPRDiscr_a$ > eighth threshold value) or ($PPRDiscrp$ > ninth threshold value) or (maxFramePulseValue > tenth threshold value)), in which maxFramePulseValue is a maximum value of the pitch power ratio $PPR_n$ over all active frames.

13. Method according to any one of claims 1-12, further comprising a compensation of the pitch power density functions of the input signal ($PPX(f)_n$) to compensate for frequency response distortions.

14. Method according to any one of claims 1-13, further comprising a compensation of the pitch power density functions of the input signal ($PPX(f)_n$) and output signal ($PPY(f)_n$) to compensate for noise response distortions

15. Method according to any one of claims 1-14, further comprising a compensation of the pitch power density functions of the output signal ($PPY(f)_n$) to compensate for a global power level normalization.

16. A processing system for establishing the impact of time response distortion of an input signal which is applied to an audio transmission system (10) having an input and an output, the output of the audio transmission system (10) providing an output signal, comprising a processor (11) connected to the audio transmission system (10) for receiving the input signal (X(t)) and the output signal (Y(t)), in which the processor (11) is arranged for outputting a time response degradation impact quality score, and for executing the steps of the method according to any one of the claims 1 - 15.

17. Computer program product comprising computer executable software code, which when loaded on a processing system, allows the processing system to execute the method according to any one of the claims 1 to 15.

## Fig 1

## Fig 2(1)

# Fig 2(2)

**European Patent Office**

**EUROPEAN SEARCH REPORT**

Application Number

EP 07 00 6550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 343 145 A (KONINKL KPN NV [NL]) 10 September 2003 (2003-09-10) * page 6, line 35 - page 10, line 16; figure 2 * | 1-17 | INV. G10L19/00 H04M3/22 |
| A | WO 2006/033570 A (TNO [NL]; BEERENDS JOHN GERARD [NL]) 30 March 2006 (2006-03-30) * page 10, line 5 - page 12, line 27; figures 2,3 * | 1-17 | |
| A | HOENE C ET AL: "Calculation of speech quality by aggregating the impacts of individual frame losses" QUALITY OF SERVICE - IWQOS 2005. 13TH INTERNATIONAL WORKSHOP, IWQOS 2005. PROCEEDINGS (LECTURE NOTES IN COMPUTER SCIENCE VOL. 3552) SPRINGER-VERLAG BERLIN, GERMANY, 2005, pages 136-150, XP002443924 ISBN: 3-540-26294-6 * the whole document * | 1-17 | |
| A | S. VORAN: "Perception of temporal discontinuity impairments in coded speech - a proposal for objective estimators and some subjective test results" PROC. OF THE 2ND INT. CONF. ON MEASUREMENT OF SPEECH AND AUDIO QUALITY IN NETWORKS, May 2003 (2003-05), XP002443925 Prague, Czech Republic * the whole document * | 1-17 | TECHNICAL FIELDS SEARCHED (IPC) G10L H04M |

The present search report has been drawn up for all claims

| Place of search | Date of completion of the search | Examiner |
|---|---|---|
| The Hague | 24 July 2007 | Burchett, Stefanie |

EPO FORM 1503 03.82 (P04C01)

**ANNEX TO THE EUROPEAN SEARCH REPORT
ON EUROPEAN PATENT APPLICATION NO.**                    EP 07 00 6550

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2007

| Patent document cited in search report | | Publication date | Patent family member(s) | | Publication date |
|---|---|---|---|---|---|
| EP 1343145 | A | 10-09-2003 | NONE | | |
| WO 2006033570 | A | 30-03-2006 | AU | 2005285694 A1 | 30-03-2006 |
| | | | CA | 2580763 A1 | 30-03-2006 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006033570 A

### Non-patent literature cited in the description

- **J. BEERENDS et al.** PESQ, the new ITU standard for objective measurement of perceived speech quality, Part II - Perceptual model. *J. Audio Eng. Soc,* October 2002, vol. 50, 765-778
- **A. W. RIX ; M. P. HOLLIER ; A. P. HEKSTRA ; J. G. BEERENDS.** PESQ, the new ITU standard for objective measurement of perceived speech quality, Part 1 - Time alignment. *J. Audio Eng. Soc,* October 2002, vol. 50, 755-764
- **J. G. BEERENDS ; A. P. HEKSTRA ; A. W. RIX ; M. P. HOLLIER.** PESQ, the new ITU standard for objective measurement of perceived speech quality, Part II - Perceptual model,. *J. Audio Eng. Soc,* October 2002, vol. 50, 765-778